# EUROPEAN PATENT APPLICATION

(11) **EP 4 050 688 A1**
(43) Date of publication of application: **31.08.2022**
(21) Application number: 20878644.2
(22) Date of filing: 27.04.2020
(51) Int. Cl.: H01M 10/04, B65H 35/08

(54) **APPARATUS AND METHOD FOR IMPROVING FOLDABILITY OF SEPARATOR IN PRISMATIC SECONDARY BATTERY CELL MANUFACTURING EQUIPMENT**

(30) Priority: 25.10.2019 KR 20190133321; 25.04.2020 KR 20200050417
(71) Applicant: Innometry Co., Ltd., Gyeonggi-do 13930 (KR); Shin, Hyuk, Gyeonggi-do 18482 (KR)
(72) Inventor: JANG, Seung Gyu, Hwaseong-si Gyeonggi-do 18411 (KR); HWANG, Jin Il, Suwon-si Gyeonggi-do 16670 (KR); SHIN, Hyuk, Hwaseong-si Gyeonggi-do 18482 (KR)
(74) Representative: Reiser & Partner Patentanwälte mbB
(86) International application number: PCT/KR2020/005520
(87) International publication number: WO 2021/080101

(57) **Abstract**

Provided area an apparatus and a method for improving the foldability of a separator interposed between polar plates in prismatic secondary battery cell manufacturing equipment. Provided are an assembly and a method for improving the foldability of a separator, the assembly including a wheel knife capable of moving in a horizontal direction with respect to the supply direction of the separator on the prismatic secondary battery cell manufacturing equipment, wherein the wheel knife can rotate with respect to the center thereof, and, when the wheel knife moves on the separator, a recessed part is formed on the separator along the movement path thereof.

## Description

### TECHNICAL FIELD

The present invention relates to an apparatus and method for processing a separator in electrode plate stacking equipment for a secondary battery, and more particularly, to an apparatus and method for improving foldability of a separator.

### BACKGROUND

In general, a chemical cell is composed of a pair of electrodes, i.e., a positive electrode plate and a negative electrode plate, and electrolyte. The amount of energy that can be stored in a chemical cell varies depending on the material contained in the electrode and the electrolyte. The chemical cells are classified into primary batteries used only for one-time discharge due to a very slow charging reaction and secondary batteries that can be reused through repetitive charging and discharging. Recently, the use of secondary batteries is increasing due to the advantage of charging and discharging.

Due to its advantages, secondary batteries have been applied to various technical fields throughout the industry, and are widely used as energy sources of mobile communication devices such as smart phones, and are attracting attention as energy sources of electric vehicles.

The secondary battery is manufactured in a form in which a positive electrode plate, a separator, and a negative electrode plate are sequentially stacked to be immersed in electrolyte. There are two main methods of manufacturing an inner cell stack of the secondary battery.

In the case of a small secondary battery, a method of arranging a negative electrode plate and a positive electrode plate on a separator and winding them in a jelly-roll form is widely used, whereas in the case of a medium and large secondary battery having more electric capacity, a method of arranging a negative electrode plate and a positive electrode plate by stacking them in a proper order with a separator is widely used.

In a zigzag-type (also referred to as a 'z-folding' type) stacking method widely used among the methods of manufacturing a secondary battery cell stack in a stacking manner, the separator forms a zigzag folded shape, and the negative electrode plates and the positive electrode plates are alternately stacked on it in an inserted form.

These stacking methods are configured to repeatedly fold the separator to conform to the shape of electrode plates. During the stacking process, both corner parts of the separator are folded in a state of being fixed by the grippers, whereas the middle part of the separator is folded without being fixed by the grippers so that the middle part can easily be damaged by contact with the side of the electrode plate due to the tension of the separator.

Conventionally, since most secondary batteries were small, the foldability of the separator was not a big problem. However, in recent years, as interest and demand for large-sized electric devices such as electric vehicles increase, the need for medium-to-large batteries having large size and capacity is increasing. As the size of the battery itself increases, the foldability of the separator becomes worse. Thus, the possibility of damage to the electrode plate increases as the size of the battery increases.

Korean Registered Patent No. 10-1627061 (published on June 3, 2016) discloses a perforating process for forming a gas discharge hole between a power generation element and a sealing part of a secondary battery and a subsequent sealing process to prevent leakage of electrolyte while discharging internally generated gas.

### DETAILED DESCRIPTION OF THE INVENTION

### PROBLEM TO BE SOLVED

An object of the present invention is to provide an apparatus and method for improving the foldability of a separator.

### SUMMARY OF THE INVENTION

The present invention for achieving the above object includes the following aspects and any combination thereof.

One aspect of the present invention is an assembly for improving foldability of a separator to be interposed between electrode plates in a prismatic secondary battery cell manufacturing equipment, comprising a wheel knife configured to be movable transversely to a feeding direction of the separator on the battery cell manufacturing equipment, the wheel knife being rotatable about a center of thereof, wherein a depressed line is formed on the separator along a moving path of the wheel knife when the wheel knife moves on the separator.

Another aspect of the present invention is an assembly for improving foldability of a separator further comprising a backing plate arranged opposite to the wheel knife with the separator positioned therebetween, wherein the backing plate is configured to support a surface of the separator when the wheel knife moves on the separator.

Another aspect of the present invention is an assembly for improving foldability of a separator in which at least one of the wheel knife and the backing plate is configured to be moved to or away from each other.

Another aspect of the present invention is an assembly for improving foldability of a separator in which the backing plate further includes a clamp, and the separator is fixed or released by moving the clamp back and forth.

Another aspect of the present invention is an assembly for improving foldability of a separator in which the backing plate further includes a groove corresponding to the moving path of the wheel knife.

Another aspect of the present invention is an assembly for improving foldability of a separator in which the wheel knife includes a plurality of protrusions arranged at a regular interval around its circumference, and depressions are formed on the separator at a regular interval by the protrusions as the wheel knife moves on the separator.

Another aspect of the present invention is an assembly for improving foldability of a separator in which the wheel knife includes a plurality of sharp protrusions arranged at a regular interval around its circumference, and punctures are formed on the separator at a regular interval by the the sharp protrusions as the wheel knife moves on the separator.

Another aspect of the present invention is an assembly for improving foldability of a separator in which the punctures are not formed near both edges of the separator.

Another aspect of the present invention is an assembly for improving foldability of a separator in which processing is performed on the separator periodically.

Another aspect of the present invention is an assembly for improving foldability of a separator in which processing is performed on the separator at the moment the separator stops running during a prismatic secondary battery cell manufacturing process.

Another aspect of the present invention is a prismatic secondary battery cell manufacturing equipment having an assembly for improving foldability of a separator according to any one of the above aspects.

Another aspect of the present invention is a method for improving foldability of a separator to be interposed between electrode plates in a prismatic secondary battery cell manufacturing equipment, comprising continuously feeding the separator, the separator being folded along one side of an electrode plate on a stack base of the prismatic secondary battery cell manufacturing equipment to be interposed between electrode plates, in which the separator is subject to processing before the separator reaches the stack base, wherein the processing is forming a depressed line on the separator along a moving path of a wheel knife by moving the wheel knife on the separator, the wheel knife being movable transversely to a feeding direction of the separator and rotatable about a center of thereof.

Another aspect of the present invention is a method for improving foldability of a separator further comprising a backing plate arranged opposite to the wheel knife with the separator positioned therebetween, wherein the backing plate is configured to support a surface of the separator when the wheel knife moves on the separator.

Another aspect of the present invention is a method for improving foldability of a separator in which at least one of the wheel knife and the backing plate is configured to be moved to or away from each other.

Another aspect of the present invention is a method for improving foldability of a separator in which the backing plate includes one or more clamps, and the separator can be fixed or released by moving the clamps back and forth.

Another aspect of the present invention is a method for improving foldability of a separator in which the backing plate includes a groove corresponding to the moving path of the wheel knife.

Another aspect of the present invention is a method for improving foldability of a separator in which the wheel knife includes a plurality of protrusions arranged at a regular interval around its circumference, and depressions are formed on the separator at a regular interval by the protrusions as the wheel knife moves on the separator.

Another aspect of the present invention is a method for improving foldability of a separator in which the wheel knife includes a plurality of sharp protrusions arranged at a regular interval around its circumference, and punctures are formed on the separator at a regular interval by the the sharp protrusions as the wheel knife moves on the separator.

Another aspect of the present invention is a method of improving foldability of a separator in which the punctures are not formed near both edges of the separator.

Another aspect of the present invention is a method of improving foldability of a separator in which processing is performed on the separator periodically.

Another aspect of the present invention is a method for improving foldability of a separator in which processing is performed on the separator at the moment the separator stops running during a prismatic secondary battery cell manufacturing process.

Another aspect of the present invention is a prismatic secondary battery cell manufactured by the method according to any one of the above aspects.

Another aspect of the present invention is a method for improving foldability of a separator to be interposed between electrode plates of a prismatic secondary battery cell in a zigzag-type stacking equipment in which the separator is continuously provided between the electrode plates by being folded along a side of the electrode plate, comprising processing the separator along a line to be folded in the separator immediately before the separator passes an end roller of the stacking equipment, wherein the processing of the separator includes forming a series of cuts on the separator by advancing an actuator with a plurality of fine blades arranged in a row toward the separator.

Another aspect of the present invention is a method for improving foldability of a separator in which the processing of the separator is performed for each portion where the separator is folded.

Another aspect of the present invention is a method for manufacturing a prismatic secondary battery cell using a zigzag-type stacking equipment in which a separator is continuously provided between electrode plates by being folded along a side of the electrode plate, comprising processing the separator along a line to be folded in the separator immediately before the separator passes an end roller of the stacking equipment, wherein the processing of the separator includes forming a series of cuts on the separator by advancing an actuator with a plurality of fine blades arranged in a row toward the separator.

Another aspect of the present invention is a method for manufacturing a prismatic secondary battery cell in which the processing of the separator is performed for each portion where the separator is folded.

Another aspect of the present invention is a prismatic secondary battery cell manufactured by a method according to any one of the above aspects.

### EFFECT OF THE INVENTION

According to the present invention, it is possible to provide a separator having excellent foldability when stacking electrode plates of a secondary battery cell.

In addition, according to the present invention, the sides of electrode plates are prevented from being damaged by a separator when electrode plates of a secondary battery cell are stacked.

Effects of the present invention are not limited to the effects mentioned above, and other effects not mentioned will be clearly understood by those skilled in the art from the following description.

### BRIEF DESCRIPTION OF THE DRAWINGS

FIG. 1 is a side view of a prismatic secondary battery cell manufacturing equipment having a wheel knife module according to an embodiment of the present invention.
FIG. 2 is a partially enlarged view of the embodiment shown in FIG. 1.
FIG. 3 illustrates a state in which a wheel knife module is processing a separator according to an embodiment of the present invention.
FIG. 4 is a side view of a prismatic secondary battery cell manufacturing equipment having a wheel knife module, according to another embodiment of the present invention.
FIG. 5 is a perspective view illustrating an actuation of the wheel knife module according to the embodiment of FIG 4.
FIG. 6A is a plan view of a wheel knife according to an embodiment of the present invention.
FIG. 6B is a plan view of a wheel knife according to another embodiment of the present invention.
FIG. 7 illustrates a separator gripped by grippers according to an embodiment of the present invention.
FIG. 8 illustrates the supply or feeding of a separator processed according to an embodiment of the present invention.
FIG. 9 illustrates processing of a separator in a zigzag-type stacking process of a secondary battery cell according to an embodiment of the present invention.

### DETAILED DESCRIPTION OF EMBODIMENTS

The embodiments shown in the accompanying drawings are presented for a clear understanding of the present invention, but the present invention is not limited thereto. In the following description, components having the same reference numerals in different drawings have similar functions, and therefore will not be repeatedly described unless necessary for the understanding of the invention. Also, well-known components will be briefly described or omitted, but should not be construed as being excluded from the embodiments of the present invention.

Hereinafter, the present invention will be described in detail with reference to the accompanying drawings.

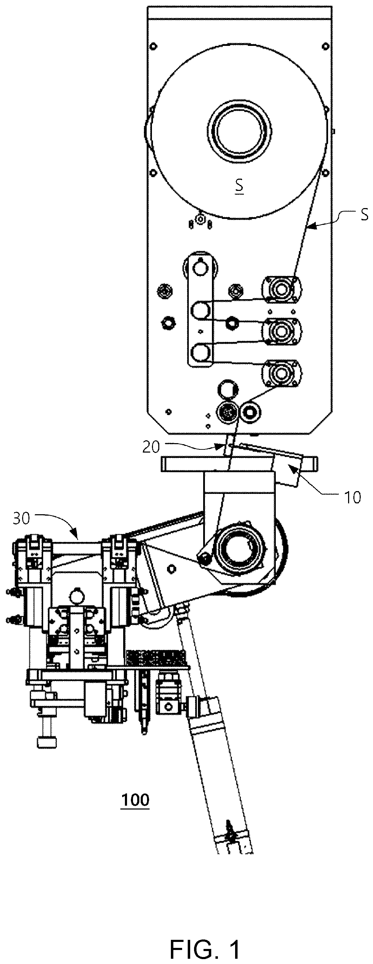

FIG. 1 illustrates a prismatic secondary battery cell manufacturing equipment 100 having a wheel knife module 10.

A separator S wound in a roll-type arranged in the upper side of the equipment 100 reaches a stack base 30 through a plurality of rollers. The separator is interposed between a positive electrode plate (not shown) and a negative electrode plate (not shown) on the stack base 30. The separator may be continuously provided between the electrode plates by being folded along one side of each electrode plate.

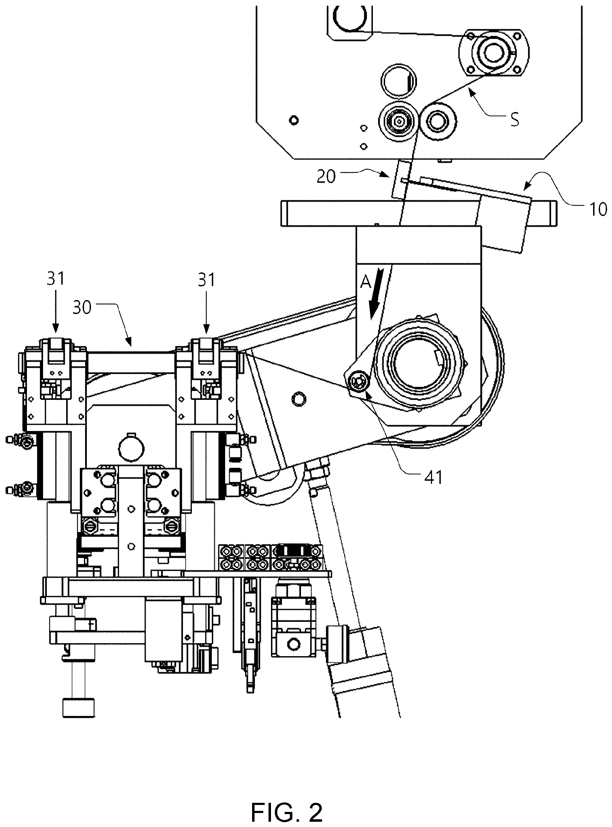

Referring to FIG. 2, it is shown that the separator S is provided in the direction of the arrow A and is processed by the wheel knife module 10 before passing end rollers 41 located near the end of the separator supply path. Here, the term, "processing" may include at least processing the separator to improve its foldability, for example, forming a depression. The term, "foldability" means the property of being easily folded. In the present disclosure, the term "depression" refers to a concept encompassing all physical deformations that facilitate folding of the separator, such as pressed marks, dimple, cuts, and pinholes. A backing plate 20 may be disposed on the opposite side of the wheel knife module 10 with the separator S positioned therebetween. The separator S may be gripped by a gripper 31 on the stack base 30.

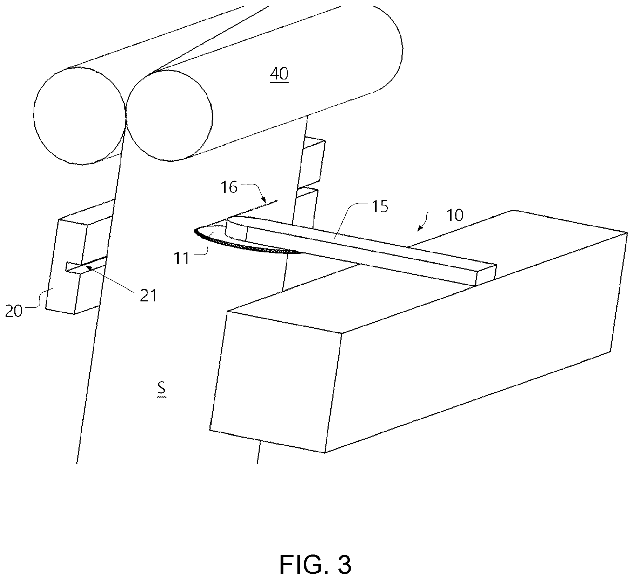

FIG. 3 shows processing of the separator S supplied through rollers 40 using the exemplary wheel knife module 10 provided in the prismatic secondary battery cell manufacturing equipment 100. The wheel knife module 10 may include a wheel knife 11 and a wheel knife shaft 15. The wheel knife 11 may be moved in a direction transverse to the supply direction of the separator S by a mechanism exemplified below. The wheel knife 11 is rotatable about its center, so as to be rotated as it moves on the separator S leaving a processing mark 16. The back side of the separator S may be supported by the backing plate 20.

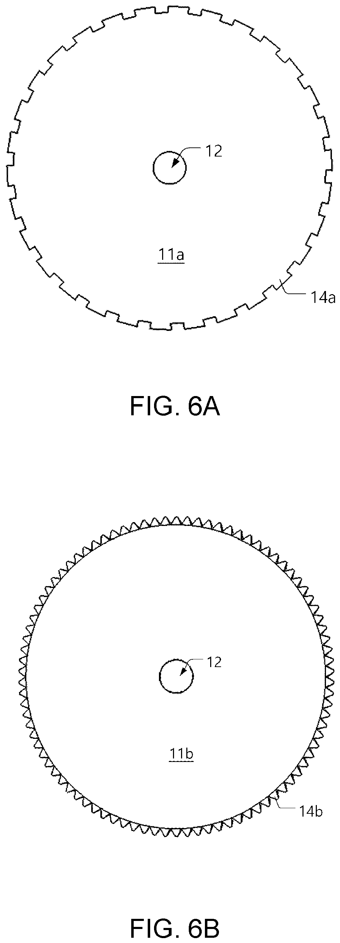

The backing plate 20 may have a groove 21 corresponding to the lateral movement path of the wheel knife 11. When protrusions are formed on the circumference of the wheel knife 11 (see FIGS. 6A and 6B), the presence of the groove 21 may allow the protrusions of the wheel knife 11 to penetrate through the separator.

Since processing is not necessary at both edges of the separator where it is gripped by the grippers 31, processing may not be performed near the edges. In addition, depending on the type of processing, the edge area may not be processed to prevent the complete cutting of the separator (S).

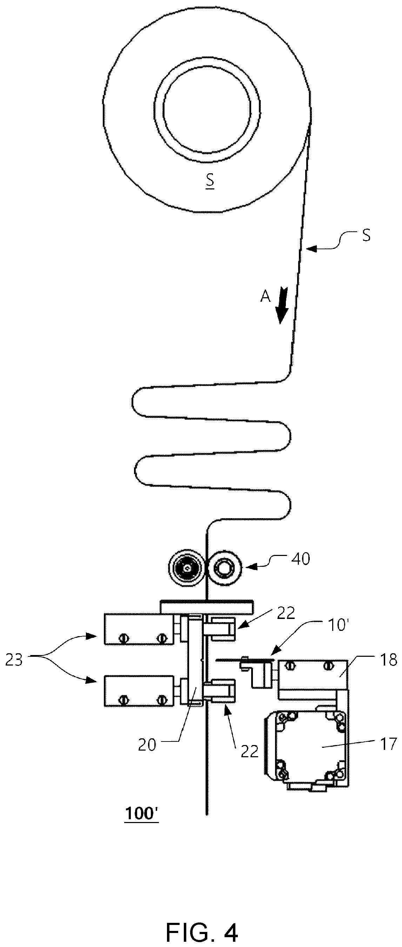

FIG. 4 is a side view of a prismatic secondary battery cell manufacturing equipment 100' having a wheel knife module according to another embodiment of the present invention. For clarity of explanation, some of the connection components including some rollers are omitted.

The separator provided in the direction of the arrow 'A' may be processed by the wheel knife module 10' after passing the roller 40. The wheel knife module 10' may include a wheel knife forward/backward actuation cylinder 18 and a wheel knife left/right actuation robot 17. The backing plate 20 oppositely disposed may be connected to clamps 22 and clamp forward/backward actuation cylinders 23.

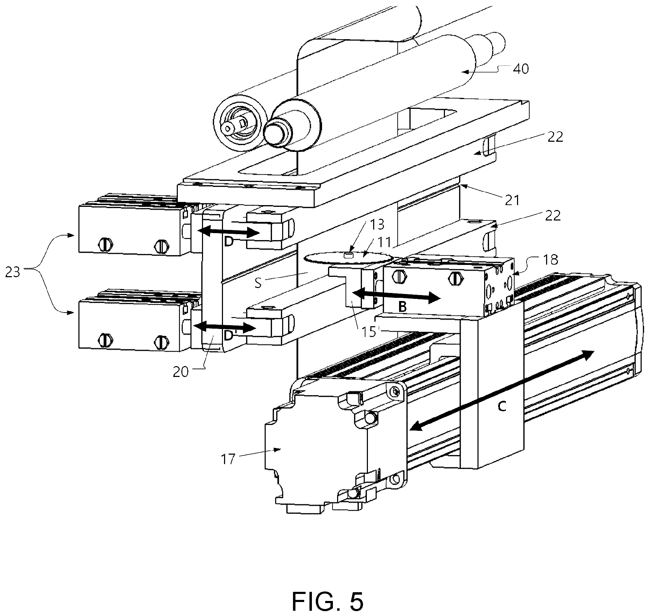

Referring to FIG. 5, the operation of the wheel knife module 10' for processing the separator S will be described.

The wheel knife 11 is connected to the wheel knife shaft 15' rotatably about a rotation axis 13, and the wheel knife shaft 15' is coupled to the wheel knife forward/backward actuation cylinder 18. By the actuation of the wheel knife forward/backward actuation cylinder 18 indicated by a double-headed arrow B, the wheel knife 11 may advance toward the separator S or retract away from it. In addition, the wheel knife 11 is coupled to the wheel knife left/right actuation robot 17 through several components including the wheel knife shaft 15', so that it can be moved in the transverse direction with respect to the running or traveling direction of the separator S. The left/right, i.e., lateral movement of the wheel knife left/right actuation robot 17 is indicated by a double-headed arrow C.

The clamps 22 may be provided on upper and lower parts of the backing plate 20, and they may be connected to a clamp forward/backward actuation cylinder 23, respectively. When the clamp forward/backward actuation cylinder 23 is operated (refer to a double-headed arrows D and D'), the separator S may be fixed to or released from the backing plate 20 by the clamp 22. Accordingly, the separator S can be fixed without wobbling when the wheel knife 11 continues to form processing marks such as cuts on the separator S.

Such a processing operation on the separator S may be performed at the moment the feeding of the separator is stopped, that is, while the separator S is not progressed, for example, while the electrode plate is placed on the stack base 30. Therefore, it is possible to perform the processing operation on the separator for improving the foldability of the separator during the secondary battery cell manufacturing process without causing a delay in the overall process time. In addition, by adding the above-described separator processing tools to an existing secondary battery cell manufacturing equipment, it may be possible to process the separator without the need to modify or change the existing equipment or processes.

FIG. 6Aand 6B illustrate exemplary wheel knifes 11 according to the present invention.

FIG. 6A depicts a shape in which a plurality of protrusions 14a are formed at regular intervals along the circumference of the wheel knife 11a, and FIG. 6B depicts a shape in which a plurality of sharp protrusions 14b are formed around the circumference of the wheel knife 11b. Each wheel knife 11a, 11b may have a hole 12 to which a rotating shaft may be connected.

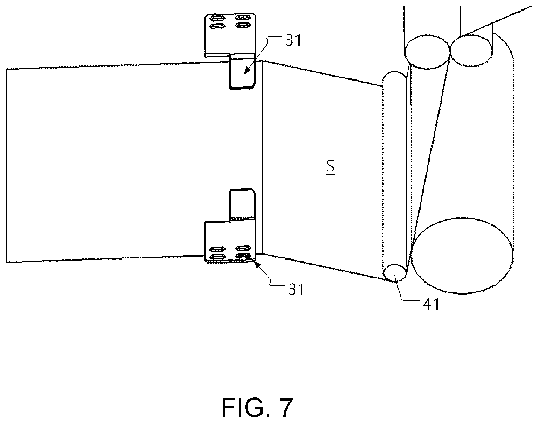

FIG. 7 illustrates, as a process in which the processed separator S is supplied to the stack base 30, that the processed separator S may be fixed by the grippers 31 on the stack base 30 after it passed the end roller 41. The separator S may be folded according to the movement of the stack base since it is fixed to the stack base by the grippers 31. In this case, foldability may be improved by the above-described processing marks 16.

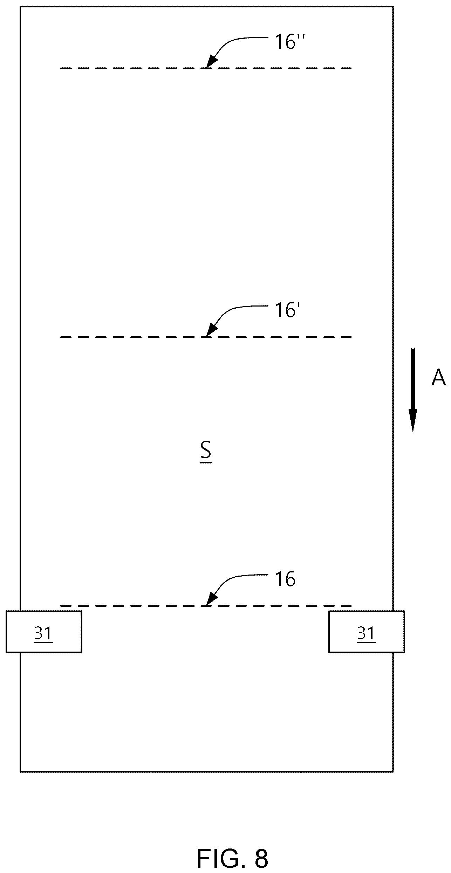

In FIG. 8, it is shown that processing marks 16, 16', 16" have been formed at intervals by the wheel knife module in the upstream part on the separator S progressing in the feeding direction A. As depicted, the processing marks 16 are configured to be arranged adjacent to one edge of each gripper 31, 31 without overlapping the grippers 31, 31.

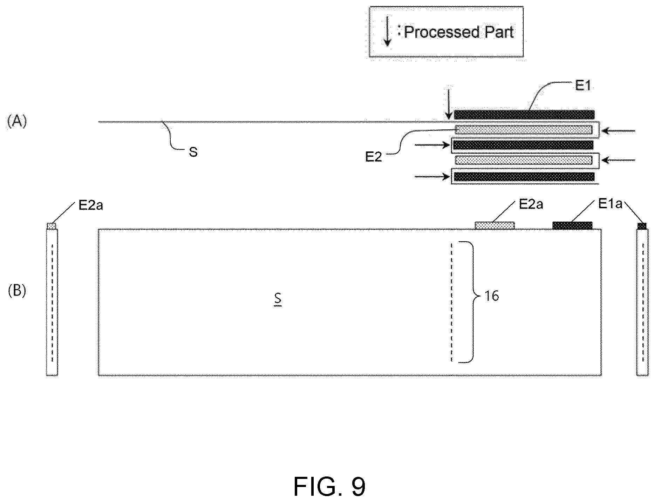

FIG. 9 illustrates processing of a separator in a zigzag-type stacking process of a secondary battery cell according to an embodiment of the present invention.

FIG. 9(A) shows a separator S interposed in a zigzag pattern between the negative electrode plate E1 and the positive electrode plate E2. An arrow marked "Processed Part" on the drawing indicates a part where processing is performed on the separator.

The separator S is processed near the side of the electrode plate E1 or E2, that is, on the folded portion surrounding one side of the electrode plate. The separator travels via several rollers such as guide rollers after it is released from a roll until it reaches the electrode plate. As described above, the processing of the separator S is performed before the separator S is folded. The separator S may be processed, for example, just before passing the last end roller.

FIG. 9(B) shows a pattern of processing marks on the separator S. The processing is performed along the line where the separator S is folded, in this case, the processing marks 16 are formed in the form of a series of cuts on the separator S. Such processing may be performed for each folding line of the separator S.

Such processing may be performed by repeatedly moving an actuator having a plurality of fine blades arranged in a row back and forth toward or away from the separator S at a specific position in the travel path of the separator S.

On both sides of FIG. 9(B), it is shown that cuts are formed in the area where the separator is folded around one electrode plate (thickness of the electrode plate is exaggerated for convenience of explanation). A folded portion surrounding a positive electrode plate E2 having a positive electrode tab E2a is illustrated on the left side, and a folded portion surrounding a negative electrode plate E1 having a negative electrode tab E1a is illustrated on the right side.

In this way, it is possible to form a line that can facilitate the separator to be folded without being rounded in the folding area.

As mentioned above, although embodiments of the present invention have been described with reference to the accompanying drawings, it will be appreciated that those of ordinary skill in the art to which the present invention pertains can practice the present invention in other specific forms without changing its technical spirit or essential features. Therefore, it should be understood that the embodiments described above are illustrative and not restrictive.

**- Explanation of reference numbers -**

| | | | |
|---|---|---|---|
| S: | separator | 100, 100': | secondary battery cell stacking equipment |
| 10, 10': | wheel knife module | 11, 11a, 11b: | wheel knife |
| 14a, 14b: | protrusion | 16: | processing mark |
| 17: | wheel knife left/right robot | 18: | wheel knife forward/backward acuation cylinder |
| 20: | backing plate | 21: | groove |
| 22: | clamp | 23: | clamp forward/backward actuation cylinder |
| 30: | stack base | 31: | gripper |
| 40: | roller | 41: | end roller |

## Claims

1. An assembly for improving foldability of a separator to be interposed between electrode plates in a prismatic secondary battery cell manufacturing equipment, comprising:
a wheel knife configured to be movable transversely to a feeding direction of the separator on the battery cell manufacturing equipment, the wheel knife being rotatable about a center of thereof;
wherein a depressed line is formed on the separator along a moving path of the wheel knife when the wheel knife moves on the separator.

2. The assembly of claim 1, further comprising a backing plate arranged opposite to the wheel knife with the separator positioned therebetween,
wherein the backing plate is configured to support a surface of the separator when the wheel knife moves on the separator.

3. The assembly of claim 2, wherein at least one of the wheel knife and the backing plate is configured to be moved to or away from each other.

4. The assembly of claim 2, wherein the backing plate includes one or more clamps, and the separator can be fixed or released by moving the clamps back and forth.

5. The assembly of claim 2, wherein the backing plate includes a groove corresponding to the moving path of the wheel knife.

6. The assembly of claim 1, wherein the wheel knife includes a plurality of protrusions arranged at a regular interval around its circumference,
wherein depressions are formed on the separator at a regular interval by the protrusions as the wheel knife moves on the separator.

7. The assembly of claim 1, wherein the wheel knife includes a plurality of sharp protrusions arranged at a regular interval around its circumference,
wherein punctures are formed on the separator at a regular interval by the the sharp protrusions as the wheel knife moves on the separator.

8. The assembly of claim 7, wherein the punctures are not formed near both edges of the separator.

9. A prismatic secondary battery cell manufacturing equipment having an assembly for improving foldability of separator according to any one of claims 1 to 8.

10. A method for improving foldability of a separator to be interposed between electrode plates in a prismatic secondary battery cell manufacturing equipment, comprising:
continuously feeding the separator, the separator being folded along one side of an electrode plate on a stack base of the prismatic secondary battery cell manufacturing equipment to be interposed between electrode plates, in which the separator is subject to processing before the separator reaches the stack base,
wherein the processing is forming a depressed line on the separator along a moving path of a wheel knife by moving the wheel knife on the separator, the wheel knife being movable transversely to a feeding direction of the separator and rotatable about a center of thereof.

11. The method of claim 10, further comprising a backing plate arranged opposite to the wheel knife with the separator positioned therebetween,
wherein the backing plate is configured to support a surface of the separator when the wheel knife moves on the separator.

12. The method of claim 11, wherein at least one of the wheel knife and the backing plate is configured to be moved to or away from each other.

13. The method of claim 11, wherein the backing plate includes one or more clamps, and the separator can be fixed or released by moving the clamps back and forth.

14. The method of claim 11, wherein the backing plate includes a groove corresponding to the moving path of the wheel knife.

15. The method of claim 10, wherein the wheel knife includes a plurality of protrusions arranged at a regular interval around its circumference,
wherein depressions are formed on the separator at a regular interval by the protrusions as the wheel knife moves on the separator.

16. The method of claim 10, wherein the wheel knife includes a plurality of sharp protrusions arranged at a regular interval around its circumference,
wherein punctures are formed on the separator at a regular interval by the the sharp protrusions as the wheel knife moves on the separator.

17. The method of claim 16, wherein the punctures are not formed near both edges of the separator.

18. A prismatic secondary battery cell manufactured by a method for improving foldability of a separator according to any one of claims 9 to 17.
